Europäisches Patentamt

European Patent Office

Office européen des brevets

(11) Publication number: **0 235 125**
**B1**

## (12) EUROPEAN PATENT SPECIFICATION

(45) Date of publication of patent specification: **02.11.89**

(51) Int. Cl.⁴: **B 65 G 65/48**

(21) Application number: **85904158.4**

(22) Date of filing: **26.08.85**

(86) International application number:
**PCT/NO85/00050**

(87) International publication number:
**WO 87/01363 12.03.87 Gazette 87/06**

(54) **DEVICE FOR TRANSPORT AND DOSED FEEDING OF POWDERY GOODS AND MATERIALS.**

(43) Date of publication of application:
**09.09.87 Bulletin 87/37**

(45) Publication of the grant of the patent:
**02.11.89 Bulletin 89/44**

(84) Designated Contracting States:
**AT BE CH DE FR GB IT LI LU NL SE**

(56) References cited:
**EP-A-0 137 507**
**DE-A-2 002 500**
**DE-A-2 014 551**
**DE-A-2 930 236**
**DE-B-1 104 434**
**GB-A- 974 446**
**NO-A- 842 553**

(73) Proprietor: **MELLGREN, Asbjorn**
**Naersnestangen 4**
**N-3478 Naerses (NO)**
(73) Proprietor: **BAKKE, Knut**
**Eventyrveien 3**
**N-1396 Bjorkäs (NO)**

(72) Inventor: **MELLGREN, Asbjorn**
**Naersnestangen 4**
**N-3478 Naerses (NO)**
Inventor: **BAKKE, Knut**
**Eventyrveien 3**
**N-1396 Bjorkäs (NO)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

This invention relates to a device for transport and controlled discharge of particulate substances. Transportation, storage and dosing of powdery materials are important operations in many and various parts of industry. In many cases, special powders and materials are involved and need equipment adapted for the material being handled taking with any particular operating conditions and/or environmental considerations being taken into account. The device of the invention described herein has been primarily developed for the operating conditions encountered when handling materials used in connection with offshore drilling for oil and gas. Additives used in drilling mud may be expensive, and will often have properties which make special treatment necessary, for example because the handling of the materials may involve health hazards for personnel coming into contact with the material. The latter problem may be regarded as a working condition environmental problem to which there may be other facts contributing also. Furthermore, many of these materials tend to diminish in volume due to compacting, which can lead to difficulties arising from bridging and plugging during gravity discharge through a container bottom outlet or the like.

Thus, equipment for transport, storage and dosing of the aforementioned materials must satisfy a variety of stringent demands, and the equipment hitherto used for this purpose has fallen a long way short of meeting these demands, perhaps especially regarding the environmental and health risk problems.

Conventional transport containers for powder materials have not been equipped with dosing units. Furthermore, these containers have been equipped with separate venting systems for supplying the air necessary to replace the volume of powder or material delivered from the container during the emptying operations. As a consequence the containers could not be made gas tight, which in turn means a risk of contamination of the surrounding air, and other disadvantages.

Often problems occur with bridging of powdery materials around an outlet opening, so that emptying is difficult or, in the best case, that the outlet flow is pulsating. The usual practice where such problems have been met has been the application of external forces to the containers, such as by means of vibrators, beating with a club etc.

In EP—A—0137507 there is described a transportable container for transport and storage of solids, which container is completely sealable and has a bottom wall with an outlet opening fitted with a sliding flap which is selectively adjustable to vary the effective area of the opening as well as to close it completely when the discharge of the contents is to be interrupted and the container is to be sealed. Mounted in the container immediately above the bottom wall is a so-called scraping device having generally radial spokes carried on a vertical drive shaft for rotation of the device to agitate the container contents and encourage flow to the outlet. A screen is located in the container vertically above the outlet to prevent the full weight of the contents acting on the flap and making it difficult to adjust.

This previous device attempted to provide a solution to the problems outlined above, but in practice it has been found not to meet this objective due to various drawbacks and deficiencies. The scraping device with all its spokes in one plane adjacent the bottom wall is not able to ensure trouble free discharge. Particulate material having a tendency to bridging will do so because the scraping device will rotate within a cavity formed at the bottom of the container. In addition, the full weight of the contents bear down on the spokes of the scraping device, which means a powerful driving motor is needed. Another disadvantage is that the sliding flap must be closed in order to ensure discharge of material is interrupted when required because the outlet opening is in constant communication with the interior space of the container.

A number of feeding and dosing devices have been proposed for stationary, i.e. permanently positioned silos and bins. Examples of such devices are those disclosed in GB 496565, GB—A—2019819, DE—A—1104434, DE—A—2014551 and DE—A—2930236. Of these DE—A—1104434 is possibly the most interesting for the present discussion as it shows a rotary sluice valve with a vertical drive shaft which extends upwards into the lower part of the silo and is equipped with an agitator for stirring the contents of the silo to facilitate flow down into the sluice. DE—A—2930236 reveals a construction in which a vertical drive shaft extends upwardly from a sluice valve assembly and carries agitator elements at two heights near the bottom of the container, the sluice valve assembly being arranged to discharge the container contents into a tubular duct coaxial with the shaft which also carries a screw for conveying the contents downwardly to an ejector device in a conduit of a pneumatic conveyor system. However, none of the known designs are especially adapted for transport containers which are completely sealed during transport and storage of powdery materials so that all influence from or on the environment is eliminated. In other respects also, including important design details, the prior art device major disadvantages and short-comings when considered in connection with the handling of the particular powders and materials mentioned above, especially regarding the unusual conditions encountered in transporting storing and dosing drilling mud additives supplied in transport containers from land bases to offshore drilling rigs.

In accordance with the present invention there is provided a device for reception and controlled discharge of particulate substances, especially powdery goods and materials having inherent health risks and/or environmental working

problems associated therewith, and/or having tendency towards bridging or plugging during gravity discharge through a container opening, the device comprising a container, an outlet opening, agitator elements carried on a vertical drive shaft within the container, and means to control flow of the container contents through the outlet openings, said means comprising a rotary sluice valve fixedly mounted under the container and forming an integrated unit therewith, the vertical shaft driving the sluice valve and extending upwardly therefrom into the container where it is equipped with said agitator elements, agitator elements being provided at at least two height levels in the container and said outlet opening being in the bottom plate of the sluice valve for said sluice valve to deliver successive doses of the container contents thereto, (as known from DE—A—2930236) characterised in that the container is completely sealable and is transportable with the sluice valve as a unit, the container being adapted to remain sealed above the sluice valve during operation of said valve to discharge the contents of the container whereby air or gas entering the container to replace the volume of the discharged contents enters through the sluice valve, that the outlet opening is shaped as a quadrilateral and at least three side edges thereof are positioned to be at an angle to a passing rotor vane of the sluice valve, and that an outlet channel extending downwardly from the outlet opening has a cross-section corresponding to the shape of the outlet opening, the two of said edges defining an apex so positioned that during operation of the sluice valve an outlet area of gradually increasing area opening up from said apex is formed for each said dose delivered to the outlet.

A device according to the invention can have the advantages that: the container can be completely water and gas proof to the environment; the sluice valve allows reliable, uninterrupted and pulse free discharge with variations in the flow rate of the material being negligible, to which the configuration to the outlet opening makes a significant contribution; even with materials which have in the past caused major problems through bridging or plugging of the outlet; the rotating agitator elements will, in a manner known per se, agitate the mass of material in lower part of the container, but over a significant height thereof, and thus break down bridges and prevent plugging; and the effect of the agitating elements will be enhanced by an airing or fluidizing effect caused by air or gas entering the container through the sluice valve, in counter flow to the material being discharged, to compensate the volume of the material discharged, which effect is pronounced when the container is fully sealed.

Due to the effective airing or fluidizing of the powdery mass directly above the sluice valve, a high degree of volumetric dosing accuracy will be obtained, and in addition a high degree of certainty that the container is completely emptied.

Regarding the geometrical design of the various parts of the sluice valve, an important feature of this invention is the configuration of the outlet opening in the bottom plate of the sluice valve so that a smooth transition between successive chambers of the sluice valve is obtained during operation of the valve which contributes greatly to an even and pulsation-free material flow from the container. While this advantage is secured the quadrilateral shape ensures that the outlet channel may be of uncomplicated design. When rotation of the sluice valve is stopped discharge will be discontinued because the valve maintains the outlet openings out of direct communication with the interior of the container. Further advantages and preferred features of the device according to the invention will be explained in detail in the following with reference to the drawings.

Fig. 1 shows a simplified horizontal projection, partly sectioned, of a container according to the invention.

Fig. 2 shows a schematic horizontal view from above of the sluice valve incorporated in the device of Fig. 1, and

Fig. 3 shows a simplified vertical section through the sluice valve on Fig. 2.

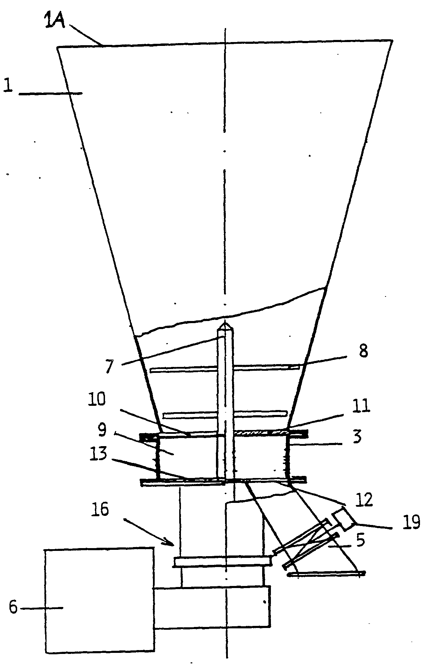

Fig. 1 shows a transport container 1, which above is completely closed with a cover 1A. It is clear that this cover may be equipped with a lid, manhole, etc. in the usual way, which also may be used for filling of the container 1 with the material to be transported, stored and dosed. As previously mentioned, the possibility of closing the container completely during transport and storage is considered very important. During dosing the material obviously must be allowed to be fed out of the container 1. This happens with aid of a rotary sluice valve 3, which has an outlet channel 5. The design of these parts will be explained in the following. Here we will shortly mention that the outlet channel 5 should have provisions for closing, which may take place with the aid of a valve with a moving or operating device 19 or simply by means of a lid on the lower part of the channel 5 like a rubber cap or similar, put on and kept in place by elastical contraction.

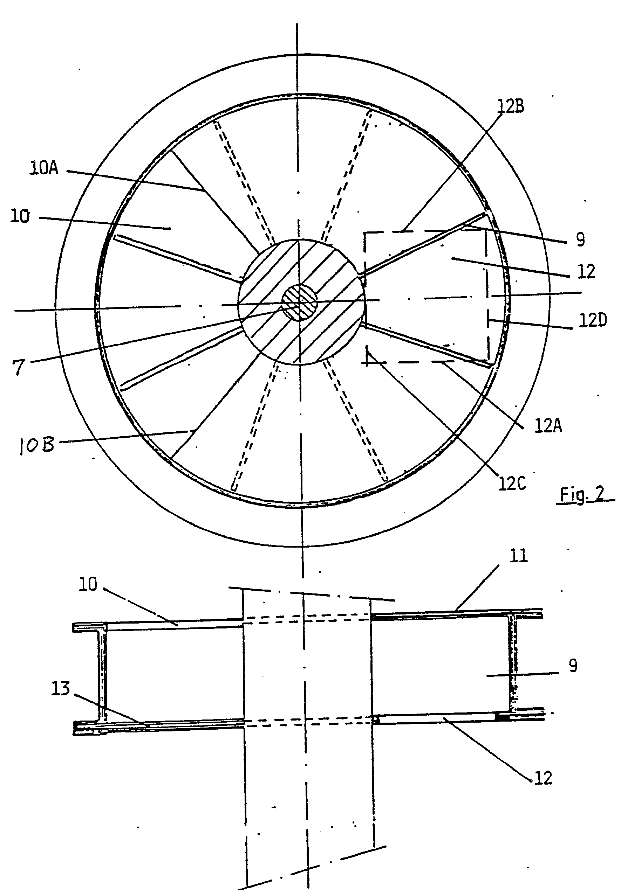

The sluice valve 3 may mainly be made according to the design which is known in principle consisting of a top plate 11 and a bottom plate 13, with an intermediate rotor, having radial vanes or rotor plates 9, see also Fig. 2 and 3. According to Fig. 3 the sluice valve has rotor blades 9. These are driven by a vertical shaft 7, which is extended up from the sluice valve into the lower part of the container 1. On the protruding section of the shaft 7 there is placed agitator elements 8 in the form of transverse rod elements. These agitator elements may be made to a variety of forms as shown in the previously mentioned known designs.

In the top plate 11 there is an inlet opening 10, which may be shaped as a sector with radial edges 10A and 10B, see in particular Fig. 2. In the bottom plate 13 there is an outlet opening 12, which according to Fig. 2 has a four-cornered shape that is rectangular with sides 12A, 12B, 12C, 12D. The shape, area and position of the outlet opening 12 is such that the advantage of having a smooth and pulsating free discharge of material from the sluice valve 3 is obtained. This is caused by the rotor blade 9, which during its rotation, moving along the material to be fed, will pass the outlet area 12 starting at a corner (e.g. a corner between the edges 12A or 12C), so that the material flow may take place through an outlet area which is gradually increasing. As shown in Fig. 2, the opening 12 in the direction of rotation may have an extension, which approximately corresponds to the distance between the outer parts of two adjacent vanes. The relative positioning of the two openings 10 and 12 brings about a complete and per se known sluicing effect, so that there is no existing free through going passage from the container 1 out through the sluice valve 3 at any time. According to Fig. 2 there will be at all times at least two rotor blades (shown with broken lines on the Figure), which on both sides will act as a barrier between the inlet opening and the outlet opening.

Using such a sluice valve, makes a complete closing of the container 1 as explained above, possible. Furthermore, the design of the sluice valve as explained, is adpated to improve on the advantageous ingoing air or gas flow compensating for the volume of material which is drawn off, having the mentioned fluidizing effect on the powdery mass, especially in the lower part of container 1. Thereby the dosing will be even and accurate and adapted to precision weighing, which is necessary for many of the additives to the drilling mud during offshore drilling.

It goes without saying that the rectangular outlet 12 shown in Fig. 2 can have a shape which is different from the displayed, in so far as a pure rectangular form is not absolutely necessary. However, the form of the opening must not be too elongated, i.e. the sides of the four-cornered shape should have dimensions not being too unlike. This is dependent on both the size and the form of the sluice chamber between the radial rotor vanes as well as the area of the outlet channel 5. A rectangular section of the outlet channel corresponding to the form of the outlet opening is preferred. This gives first of all a simple design of the channel, furthermore it makes it possible to arrange this in the wanted and most advantageous inclination without leading to an unwanted big dimension of the building height of the container unit as such. A moderate total height of the device is of course important regarding the transport and manipulation to which the containers are submitted in practical operations.

It is advantageous that the outlet channel 5 runs at an inclination downwards/outwards exentrical in relation to the sluice valve at shaft 7, as shown on Fig. 1. Among other things this will make possible the placing of the container unit on equipment, working for the same purpose, with the outlet chamber 5 orientated either to one or to the other side, e.g. for giving off a regulated mass flow to one or to the other of two parallel conveyer devices taking the powdery mass to its destination.

Finally Fig. 1 shows a motor 6 driving the shaft 7 through suitable transmissions and a coupling indicated by 16. This may be a disengageable coupling, so that the motor 6 may be part of the stationary equipment on an offshore drilling rig, adapted for driving the sluice valve 3 and the corresponding agitator 8 on the transport containers, which during drilling operations alternatingly or in sequence shall empty their contents into the equipment on board.

**Claims**

1. A device for reception and controlled discharge of particulate substances, especially powderly goods and materials having inherent health risks and/or environmental working problems associated therewith, and/or having a tendency towards bridging or plugging during gravity discharge through a container opening, the device comprising a container (1), an outlet opening (12), agitator elements (8) carried on a vertical drive shaft (7) within the container, the means to control flow of the container contents through the outlet openings, said means comprising a rotary sluice valve (3, 9, 10, 12) fixedly mounted under the container and forming an integrated unit therewith, the vertical shaft (7) driving the sluice valve and extending upwardly therefrom into the container where it is equipped with said agitator elements (8), agitator elements being provided at at least two height levels in the container and said outlet opening (12) being in the bottom plate (13) of the sluice valve for said sluice valve to deliver successive doses of the container contents thereto, characterised in that the container (1) is completely sealable and is transportable with the sluice valve as a unit, the container being adapted to remain sealed above the sluice valve during operation of said valve to discharge the contents of the container whereby air or gas entering the container to replace the volume of the discharged contents enters through the sluice valve, that the outlet opening (12) is shaped as a quadrilateral and at least three side edges (12A—D) thereof are positioned to be at an angle to a passing rotor vane (9) of the sluice valve, and that an outlet channel (5) extending downwardly from the outlet opening (12) has a cross-section corresponding to the shape of the outlet opening, the two of said edges (12A, 12C) defining an apex so positioned that during operation of the sluice valve an outlet area of gradually increasing area opening up from said apex is formed for each said dose delivered to the outlet.

2. A device according to claim 1, wherein the outlet opening (12) is rectangular with one pair of opposed edges thereof spaced uniformly from and parallel to a radial plane.

3. A device according to claim 1 or 2, wherein the outlet channel (5) is inclined downwardly and outwardly away from the axis of the shaft (7).

4. A device according to claim 1, 2 or 3 wherein the vertical shaft (7) is adapted at its lower end for disengageable coupling (16) to a drive motor (6).

5. A device according to any one of claims 1 to 4, wherein the outlet channel includes a shut-off valve (19).

## Patentansprüche

1. Vorrichtung zum Aufnehmen und kontrolliertem Abgeben von teilchenförmigen Substanzen, insbesondere von pulverförmigen Waren und Materialien, die damit verbundene Gesundheitsrisiken aufweisen und/oder mit denen Umweltarbeitsprobleme verknüpft sind und/oder die die Tendenz haben zur Brückenbildung oder zum Verstopfen während Abgabe unter Schwerkraftwirkung durch eine Behälteröffnung, wobei die Vorrichtung (1), eine Auslaßöffnung (12), Rührelemente (8), die auf einer vertikalen Antriebswelle (7) innerhalb des Behälters getragen sind, und Mittel zum Steuern der Strömung des Behälterinhalts durch die Auslaßöffnungen aufweist, wobei die Mittel ein Schleusendrehventil (3, 9, 10, 12) aufweisen, das fest unter dem Behälter befestigt ist und eine in denselben einbezogene Einheit bildet, wobei die vertikale Welle (7) das Schleusenventil antreibt und sich von demselben nach oben in den Behälter erstreckt, wo sie mit den Rührelementen (8) ausgerüstet ist, wobei Rührelemente in wenigstens zwei Höhenniveaus in dem Behälter vorgesehen sind und die Auslaßöffnung (12) in der Bodenplatte (13) des Schleusenventils angeordnet ist, um nacheinander folgende Dosismengen des Behälterinhalts derselben zuzuführen, dadurch gekennzeichnet, daß der Behälter (1) vollständig verschließbar und mit dem Schleusenventil als eine Einheit transportierbar ist, wobei der Behälter so ausgebildet ist, daß er oberhalb des Schleusenventils während des Betriebs dieses Ventils zum Ablassen des Inhalts des Behälters geschlossen bleibt, wobei Luft oder Gas, das in den Behälter eintritt, um das Volumen des abgelassenen Inhalts zu ersetzen, durch das Schleusenventil eintritt, das die Auslaßöffnung (12) als ein Viereck geformt ist und wenigstens drei Seitenkanten (12A—D) desselben in einem Winkel zu einem vorbeistreichenden Rotorflügel (9) des Schleusenventils angordnet sind, und daß ein Auslaßkanal (5), der sich nach unten von der Auslaßöffnung (12) erstreckt, einen Querschnitt hat, der der Form der Auslaßöffnung entspricht, wobei zwei der Seitenkanten (12A, 12C) einen so angeordneten Scheitelpunkt bilden, daß während Betriebs des Schleusenventils ein Auslaßbereich mit allmählich anwachsender Fläche, der sich von dem Scheitelpunkt aus öffnet, für jede Dosismenge gebildet wird, die dem Auslaß zugeführt wird.

2. Vorrichtung nach Anspruch 1, bei der die Auslaßöffnung (12) rechteckig ist, wobei zwei gegenüberliegende Kanten desselben einen gleichförmigen Abstand von einer Radialebene habeb und parallel zu derselben sind.

3. Vorrichtung nach Anspruch 1 oder 2, bei der Auslaßkanal (5) nach unten und nach außen weg von der Achse der Welle (7) geneigt ist.

4. Vorrichtung nach Anspruch 1, 2 oder 3, bei der die vertikale Welle (7) so ausgebildet ist, daß sie an ihrem unteren Ende lösbar (16) mit einem Antriebsmotor (6) verbindbar ist.

5. Vorrichtung nach einem der Ansprüche 1 bis 4, bei der der Auslaßkanal ein Absperrventil (19) einschließt.

## Revendications

1. Dispositif pour la réception et la décharge contrôlée de substances particulaires, en particulier de produits pulvérulents et de matières de nature à présenter des risques pour la santé et/ou à poser des problèmes d'environnement de travail et/ou ayant tendance à former des ponts ou des bouchons pendant la décharge par gravité à travers l'ouverture d'un récipient, le dispositif comprenant un récipient (1), une ouverture de sortie (12), des éléments de brassage (8) portés sur un arbre d'entraînement vertical (7) à l'intérieur du récipient et un moyen pour régler l'écoulement du contenu du récipient à travers l'ouverture de sortie, ce moyen comprenant une vanne rotative à sas (3, 9, 10, 12) montée fixe sous le récipient et formant un ensemble d'un seul tenant avec lui, l'arbre vertical (7) entraînant la vanne à sas et s'étendant à partir de celle-ci vers le haut dans le récipient, où il est équipé des éléments de brassage (8), lesquels sont prévus à au moins deux hauteurs différentes dans le récipient, et l'ouverture de sortie (12) étant prévue dans la plaque inférieure (13) de la vanne à sas, en vue de la délivrance par la vanne de doses successives du contenu du récipient à cette ouverture, caractérisé en ce que le récipient (1) peut être fermé étanche complètement et est transportable avec la vanne à sas sous la forme d'un ensemble, le récipient étant conçu pour rester fermé étanche au-dessus de la vanne à sas pendant le fonctionnement de celle-ci pour décharger le contenu du récipient, l'agencement étant tel que de l'air ou un autre gaz pénètre dans le récipient à travers la vanne à sas pour remplacer le volume du contenu déchargé, que l'ouverture de sortie (12) affecte la forme d'un quadrilatère dont au moins trois côtés (12A—D) sont orientés pour former un angle avec une aube de rotor (9) passant devant eux et faisant partie de la vanne à sas, et qu'une goulotte de sortie (5), s'étendant vers le bas à partir de l'ouverture de sortie (12), possède une section droite correspondant à la forme de l'ouverture de sortie, deux desdits côtés (12A, 12C) de l'ouverture de sortie définissant une pointe qui est disposée de manière que pendant le fonctionnement de la vanne à sas, une section de sortie dont la grandeur s'accroît graduellement, à partir de ladite pointe, soit formée pour chacune des doses délivrées à la sortie.

2. Dispositif selon la revendication 1, dans lequel l'ouverture de sortie (12) est rectangulaire et possède deux côtés opposés qui sont parallèles à un plan radial et sont uniformément espacés de ce plan.

3. Dispositif selon la revendication 1 ou 2, dans lequel la goulotte de sortie (5) est inclinée vers le bas et vers l'extérieur, dans le sens de son éloignement de l'axe de l'arbre (7).

4. Dispositif selon la revendication 1, 2 ou 3, dans lequel l'arbre vertical (7) est agencé, à son extrémité inférieure, pour pouvoir être accouplé (16) de façon détachable à un moteur d'entraînement (6).

5. Dispositif selon l'une quelconque des revendications 1 à 4, dans lequel la goulotte de sortie comporte une vanne d'arrêt (19).

Fig. 2